# EUROPÄISCHE PATENTANMELDUNG

(11) **EP 1 235 059 A1**
(43) Veröffentlichungstag der Anmeldung: **28.08.2002**
(21) Anmeldenummer: 01103402.2
(22) Anmeldetag: 14.02.2001
(51) Int. Cl.: G01F 23/284, G01S 13/08

(54) **Mit Mikrowellen arbeitendes Füllstandsmessgerät**

(71) Anmelder: Endress + Hauser GmbH + Co.KG., 79689 Maulburg (DE)
(72) Erfinder: Spanke, Dr. Dietmar, 79585 Steinen (DE)
(74) Vertreter: Andres, Angelika

(57) **Zusammenfassung**

Das Füllstandsmeßgerät umfaßt eine Sende/Empfangseinheit (2) das ein von einem Füllstand in einem Behälter (200) beeinflußten Zwischenfrequenzsignals (ZF) mittels eines Sendesignals (S₂) und eines Empfangssignals (E₂) erzeugt. Ein Wandlerelement (1) koppelt im Betrieb, angesteuert vom Sendesignal (S₂), Sendewellen (S₁) in den Behälter (200) ein und wandlet von einem Füllgut (201) reflektierte Echowellen (E₁) in das Empfangssignal (E₂). Eine Steuerungseinheit (3) des Füllstandsmeßgeräts digitalisert das Zwischenfrequenzsignal (ZF) und speichert es zumindest temporär in einem flüchtigen Datenspeicher (33) inform einer Abtastfolge (AF). Abgleitet von der Abtastfolge (AF) erzeugt die Steuerungseinheit (3) einen den Füllstand, insb. millimetergenau, repräsentierenden Füllstandsmeßwert (X_{H}). Zur Ermittlung des Füllstandsmeßwerts (X_{H}) ist dabei sowohl eine Amplituden- als auch eine Phaseninformation des Zwischenfrequenzsignals (ZF) verfügbar.

## Beschreibung

Die Erfindung betrifft ein mit Mikrowellen arbeitendes Füllstandsmeßgerät.

Zur, insb. quasi-kontinuierlichen, Füllstandsmessung in Behältern, z.B. in einem Flüssigkeitstank oder in einem Schüttgutbehälter, werden oftmals mit Mikrowellen arbeitende Füllstandsmeßgeräte verwendet. Bei der Füllstandsmessung mit einem solchen Füllstandsmeßgerät werden, basierend auf dem Radarprinzip, bekanntlich elektromagnetische Wellen, insb. in einem Mittenfrequenzbereich von etwa 0.5 GHz bis 30 GHz, mittels einer Antenne als Freiraumwelle oder mittels eines Oberflächenwellenleiters als geführte Welle gegen ein zu bemessendes Füllgut ausgesendet. Aufgrund von elektrischen Impedanzsprüngen innerhalb des das Füllgut umfassenden Meßvolumens werden die Wellen, insb. an der Füllgutoberfläche, teilweise reflektiert und via Oberflächenwellenleiter bzw. via Antenne dem Füllstandmeßgerät als Echosignal zugeführt.

Die Ermittlung des Füllstands basiert bei deratigen Füllstandsmeßgeräten häufig auf dem Pulsradar-Verfahren, bei dem kurze Mikrowellenimpulse, sogenannte Bursts, mit einer Schußrate im Bereich von einigen Megahertz gegen das Füllgut geführt, dort zumindest teilweise reflektiert und in der oben beschriebenen Weise dem Füllstandmeßgerät als Echosignal wieder zugeführt werden. Eine Laufzeit der Mikrowellenimpulse, gemessen zwischen einem Zeitpunkt des Aussendens des Sendesignals bis zu einem Zeitpunkt des Empfangens des Echosignal dient hierbei als ein Maß für den zu bestimmenden Füllstand.

So ist z.B. in der US-A 56 14 911, der EP-A 955 527 und der DE-A 44 07 369 jeweils ein mit Mikrowellen arbeitendes Füllstandsmeßgerät gezeigt, das den Füllstand nach dem Pulsradar-Verfahren ermittelt und das umfaßt:
- eine Mikrowellen-Sende/Empfangseinheit zum Erzeugen eines vom Füllstand beeinflußten analogen Zwischenfrequenzsignals mittels eines Sendesignals und eines Empfangssignals
- ein Wandlerelement,
   -- das im Betrieb vom Sendesignal angesteuert Sendewellen in den Behälter einkoppelt und
   -- das von einem Füllgut reflektierte Echowellen in das Empfangssignal wandelt, sowie
- eine Hüllkurvenauswerteeinheit mit einem Amplidudendemodulator für das Zwischenfrequenzsignal zum Erzeugen eines analogen Hüllkurvensignals.

Das Hüllkurvensignal kann, wie in der DE-A 44 07 369 beschrieben, z.B. dazu dienen, eine Zählerstufe schwellwertegetriggert so anzusteuern, daß ein Mittelwert zweier Zählerstände der Zählerstufe die füllstandsabhängige Laufzeit repräsentiert. Das analoge Hüllkurvensignal kann aber auch, wie z.B. in der EP-A 955 527 beschrieben, zunächst digitalisert und, periodisch mit einem Rechteckfenster moduliert, abschnittsweise zwischengespeichert werden. Anhand einer somit erzeugten Hüllkurven-Abtastfolge kann mittels eines entsprechenden, insb. in einem Mikrocomputer implementierten, Auswerteverfahrens sowohl der Zeitpunkt des Aussendens des Sendesignals als auch der Zeitpunkt des Empfangens des Echosignal bestimmt und die Laufzeit entsprechend berechnet werden.

Es hat sich ferner gezeigt, daß für eine hochgenaue, insb. millimetergenaue, Bestimmung des Füllstands, wie z.B. in der eigenen europäischen Patentanmeldung 99 113 685.4 oder in der DE-A 44 07 369 beschrieben, neben der auf das Hüllkurvensignal abgebildeten Amplitudeninformation des Zwischenfrequenzsignals auch eine Information über eine Phasenlage des Empfangssignals im Vergleich zum Sendesignal erforderlich sein kann. Zur Gewinnung einer solchen zusätzlichen Phaseninformation umfaßt das in der DE-A 44 07 369 beschriebene Füllstandsmeßgerät außerdem eine Phasenauswerteeinheit mit einem Quadraturdemodulator für das Zwischenfrequenzsignal zum Erzeugen eines den Realanteil des Zwischenfrequenzsignals repräsentierenden analogen ersten und eines den Imginäranteil des Zwischenfrequenzsignals repräsentierenden analogen zweiten Quadratursignals.

Als nachteilig bei diesem Füllstandsmeßgerät hat sich vor allem der diskrete Aufbau sowohl der Hüllkurven- als auch der Phasenauswerteeinheit herausgestellt. Aufgrund dieses Aufbaus, insb. auch aufgrund des hohen Anteils analog verarbeitender Bauelement, kann nämlich eine Erhöhung der Schußrate des Sendesignals und/oder einer Taktrate des Meßund Auswertezyklusses, z.B. zur Erhöhung der Meßgenauigkeit und/oder der Auswertegeschwindigkeit, nur in einem sehr geringen Maße vorgenommen werden. Des weiteren muß zur Gewährleistung einer ausreichenden Genauigkeit der ermittelten Laufzeit sowohl jedes der verwendeten Bauelemente einer Typklasse von geringer Streuung und hoher Langzeitstabilität angehören als auch hochgenau und dementsprechend aufwendig verdrahtet werden.

Eine Aufgabe der Erfindung ist daher, ein insb. millimetergenau messendes, Füllstandsmeßgerät anzugeben, das zur Ermittlung eine Füllstandsmeßwert sowohl eine Amplituden- als auch eine Phaseninformation verwendet und das einen hohen Integrationsgrad aufweist.

Zur Lösung der Aufgabe besteht die Erfindung in einem mit Mikrowellen arbeitendes Füllstandsmeßgerät zum Erzeugen eines Füllstandsmeßwerts, der einen Füllstand in einem Behälter repräsentiert, welches Füllstandsmeßgerät umfaßt:
- eine Sende/Empfangseinheit zum Erzeugen eines vom Füllstand beeinflußten Zwischenfrequenzsignals mittels eines Sendesignals und eines Empfangssignals,
- ein Wandlerelement,
   -- das im Betrieb vom Sendesignal angesteuert Sendewellen in den Behälter einkoppelt und
   -- das von einem Füllgut reflektierte Echowellen in das Empfangssignal wandelt, sowie
- eine Steuerungseinheit mit einem flüchtigen Datenspeicher in dem im Betrieb zumindest temporär eine das Zwischenfrequenzsignal momentan repräsentierende endliche Abtastfolge gespeichert ist.

Nach einer bevorzugten ersten Ausgestaltung der Erfindung bestimmt das Füllstandsmeßgerät den Füllstandsmeßwert mittels einer aus der Abtastfolge gewonnenen Amplitudeninformation.

Nach einer bevorzugten zweiten Ausgestaltung der Erfindung bestimmt das Füllstandsmeßgerät den Füllstandsmeßwert mittels einer aus der Abtastfolge gewonnenen Phaseninformation.

Ein Grundgedanke der Erfindung ist es, digital abgespeicherte Rohdaten zu erzeugen, also Daten mit einem höchst möglichen Anteil an Informationen zum Meßvolumen, insb. zum Füllstand, und mit einem geringst möglichen Anteil analoger Vorverarbeitung, auf denen nachfolgende Auswerteverfahren, insb. solche zur Füllstandsermittlung, beruhen.

Ein Vorteil der Erfindung besteht darin, daß sowohl die Umwandlung des Zwischenfrequenzsignals als auch die Verarbeitung der Abtastfolge zur Ermittlung des Füllstandsmeßwerts in sehr einfacher Weise an sich verändernde Rahmenbedingungen, wie z.B. eine Veränderung der Schußrate, einer Drift der Mittenfrequenz des Sendesignals oder einer Änderung der Taktrate der Auswertung, angepaßt werden.

Ein weiterer Vorteil der Erfindung besteht ferner in einer erheblichen Verringerung des Aufwandes, der zur Gewährleistung eines ausreichend guten Signal-zu-Rausch-Verhältnisses des zu digitalisierenden Zwischenfrequenzsignals erforderlich ist.

Nachfolgend wird die Erfindung anhand eines Ausführungsbeispiels erläutert.
- Fig. 1: zeigt ein auf ein Behälter montiertes Füllstandsmeßgerät und
- Fig. 2: zeigt schematsich nach der Art eines Blockschaltbildes Funktionselemente eines mit Mikrowellen arbeitenden Füllstandsmeßgeräts.

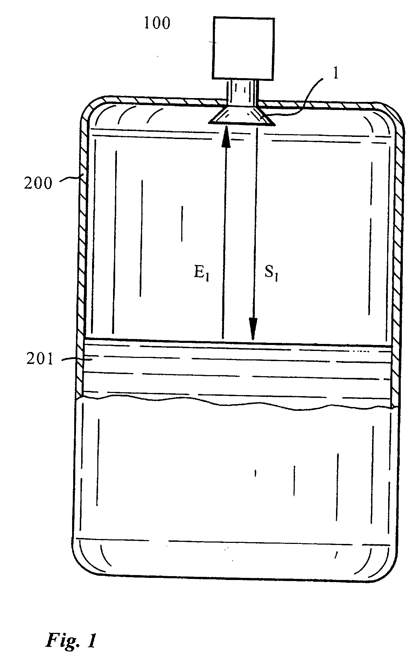

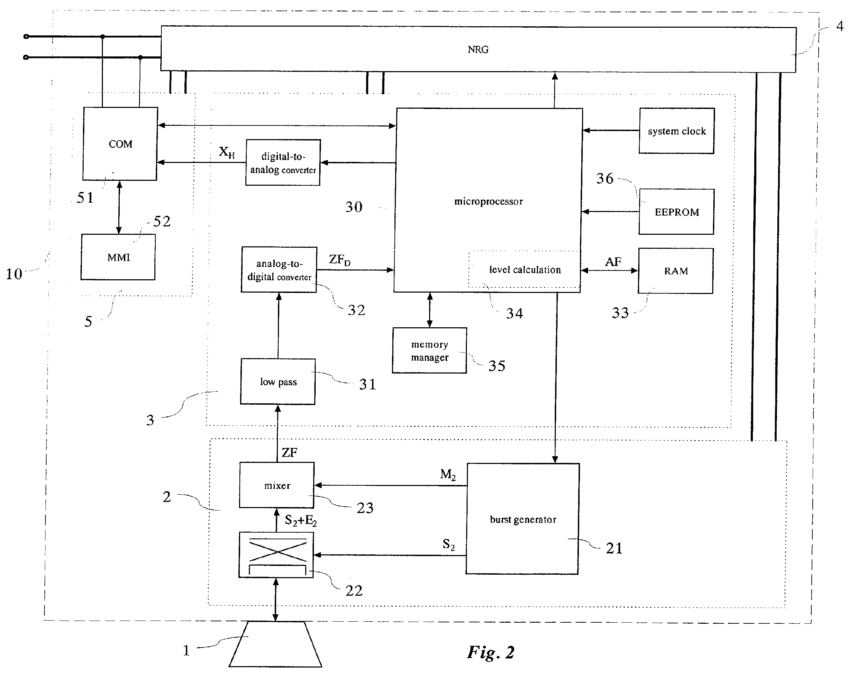

In Fig. 1 und 2 ist ein Ausführungsbeispiel eines mit Mikrowellen arbeitenden Füllstandsmeßgeräts dargestellt, das auf einen mit einem Füllgut 201 befüllbaren Behälter 200 montiert ist.

Das Füllstandsmeßgerät dient dazu, einen durch das Füllgut 201 bestimmten Füllstand im Behälter 200 basierend auf dem Pulsradar-Verfahren zu ermitteln und mittels einer entsprechenden Steuerungseinheit 3 einen diesen Füllstand momentan repräsentierenden, z.B. digitalen, Füllstandsmeßwert X_{H} zu liefern.

Dazu weist das Füllstandsmeßgerät gemäß Fig. 1 ein, insb. an einem Elektronikgehäuse 100 befestigtes, Wandlerelement 1 auf, mittels dem hochfrequent geträgerte, gepulste elektromagnetische Sendewellen S₁ in ein das Füllgut 201 umfassendes Meßvolumen eingekoppelt und, insb. in Richtung des Füllguts 201, als Freiraumwelle ausgesendet werden. Eine Mittenfrequenz des Sendesignals S₂ liegt hier, wie bei derartigen, mit Mikrowellen arbeitenden
Füllstandsmeßgeräten üblich, in einem Frequenzbereich von einigen Gigahertz, insb. im Frequenzbereich von 0.5 GHz bis 30 GHz.

Das Wandlerelement 1 kann z.B., wie dargestellt, eine Hornantenne, eine Stabantenne, eine Parabolantenne oder auch eine Planarantenne, sein, die als Sendewellen S₁ dienende elektromagnetische Mikrowellen abstrahlt. Anstelle von Freiraumwellen können aber auch geführte Oberflächenwellen zur Füllstandsmesung verwendet werden.

Aufgrund von Impedanzsprüngen innerhalb des Meßvolumens, insb. an einer Oberfläche des Füllguts 201, werden die Sendewellen S₁ zumindest teilweise reflektiert und somit in entsprechende Echowellen E₁ gewandelt, die in Richtung des Wandlerelements 1 zurücklaufen und von diesem empfangen werden.

Eine an das Wandlerelement 1 angekopplte Sende-/Empfangsstufe 2 dient dazu, leitungsgeführte und zueinander kohärente Wellenpakete von vorgebbarer Pulsform und Pulsweite, sogenannte Bursts, zu erzeugen und zu verarbeiten sowie mittels der Bursts ein vom den Füllstand beeinflußtes, analoges Zwischenfrequenzsignal ZF zu generieren. Die Pulsform eines einzelnen Bursts entspricht üblicherweise der eines nadelartigen oder eines halbwellenartigen Impulses von vorgebbarer Pulsweite.

Die Sende-/Empfangseinheit 2 ist im Elektronikgehäuse 100 untergebracht und umfaßt gemäß Fig. 2 einen elektronischen Burst-Generator 21 zum Erzeugen einer als ein Sendesignal S₂ dienenden ersten Burstfolge. Das Sendesignal S₂ ist, wie bei derartigen Füllstandsmeßgeräten üblich, mit einer Mittenfrequenz geträgert, die in etwa im Bereich zwischen 0.5 und 30 GHz liegt, und mit einer Schußrate getaktet, die auf einen Frequenzbereich von einigen Megahertz, insb. einen Frequenzbereich von 1 MHz bis 10 MHz, eingestellt ist.

Das an einem ersten Signalausgang des Burst-Generators 21 anliegende Sendesignal S₂ wird mittels eines Richtkopplers 22 der Sende-/Empfangseinheit 2 in das an einem ersten Signalausgang des Richtkopplers 22 angeschlossene Wandlerelement 1 eingeleitet und dort in die bereits erwähnten Sendewellen S₁ gewandelt. Praktisch gleichzeitig liegt das Sendesignal S₂ außerdem an einem zweiten Signalausgang des Richtkopplers 22 an.

Die in der oben beschriebenen Weise im Meßvolumen erzeugten Echowellen E₁ werden, wie bereits erwähnt, vom Füllstansmeßgerät mittels des Wandlerelements 1 wieder empfangen und in eine als Empfangssignal E₂ dienende, ebenfalls am zweiten Signalausgang des Richtkopplers 22 anliegende zweite Burstfolge zurückgewandelt. Dementsprechend ist ausgangs des Richtkopplers 22 eine mittels des Sendesignals S₂ und des Empfangssignals E₂ gebildete Signalsumme S₂ + E₂ abgreifbar.

Aufgrund dessen, daß die Mittenfrequenz und/oder die Schußrate des Sendesignals S₂, wie bei solchen Füllstandsmeßgeräten üblich, so hoch eingestellt ist, daß ein direktes Auswerten der am zweiten Signalausgang des Richtkopplers 22 anliegenden Signalsumme, insb. ein direktes Messen der Laufzeit, praktisch nicht mehr oder nur mit einem hohen technischen Aufwand möglich wäre, umfaßt die Sende-/Empfangseinheit 2 ferner bevorzugt eine Mischerelektronik 23, die dazu dient, die hochfrequent geträgerte Signalsumme zeitlich zu dehnen, und zwar so, daß die Mittenfrequenz und die Schußrate in einen niedrigeren Frequenzbereich von einigen Kilohertz verschoben werden.

Zum zeitlichen Dehnen der Signalsumme S₂ + E₂ wird diese einem mit dem zweiten Signalausgang des Richtkopplers 22 verbundenen ersten Signaleingang der Mischerelektronik 23 zugeführt. Gleichzeitig mit der Signalsumme ist einem zweiten Signaleingang der Mischerelektronik 23 eine als ein Mischsignal M₂ dienende dritte Burstfolge angelegt. Eine Taktrate, mit der das Mischsignal M₂ getaktet ist, ist dabei etwas kleiner eingestellt als die Schußrate des Sendesignals S₂. Das Mischsignal M₂ weist jedoch praktisch dieselbe Mittenfrequenz wie das Sendesignal S₂ auf. Das Mischsignal M₂ wird ebenfalls mittels des Burst-Generators 21 erzeugt und ist, wie in Fig. 2 dargestellt, über einen zweiten Signalausgang des Burst-Generators 21 abgreifbar.

Mittels der Mischerelektronik 23 wird die Signalsumme mit dem Mischsignal M₂ amplitudenmoduliert und anschließend tiefpaßgefiltert. Somit wird die Signalsumme S₂ + E₂ auf ein als Zwischenfrequenzsignal ZF dienendes Signal abgebildet, das um einen Zeitdehnungsfaktor gegenüber der Signalsumme zeitlich gedehnt und dementsprechend niederfrequent ist. Der Zeitdehnungsfaktor entspricht dabei einem Quotienten der Schußrate des Sendesignals S₂ geteilt durch eine Differenz der Schußrate des Sendesignal S₂ und der Taktrate des Mischsignals M₂. Eine Mittenfrequenz des so erzeugten Zwischenfrequenzsignals ZF liegt bei derartigen Füllstandsmeßgeräten üblicherweise in einem Frequenzbereich von 50 bis 200 kHz.

Selbstverständlich kann das Zwischenfrequenzsignal ZF, falls erforderlich, vor seiner Ausgabe aus der Sende/Empfangseinheit 2 in geeigneter Weise vorverstärkt und somit in seinem Signalverlauf an nachfolgende Schaltungen angepaßt werden.

Zum Erzeugen des Füllstandsmeßwerts X_{H} aus dem Zwischenfrequenzsignal ZF umfaßt das Füllstandsmeßgerät ferner eine Steuerungseinheit 3, die ebenfalls im Elektronikgehäuse 100 untergebracht sein kann.

Erfindungsgemäß dient die Steuerungseinheit 3 dazu, das Zwischenfrequenzsignal ZF so zu digitalisieren und abschnittsweise so abzuspeichern, daß zur Ermittlung des Füllstandsmeßwerts X_{H} gleichzeitig sowohl eine Amplitudenals auch eine Phaseninformation über das Zwischenfrequenzsignal ZF in digitaler Form zur Verfügung gehalten wird.

Dazu ist das Zwischenfrequenzsignal ZF der Steuerungseinheit 3, wie in Fig. 2 schematisch dargestellt, bevorzugt über ein Tiefpaßfilter 31, z.B. einem passiven oder einem aktiven RC-Filter, von vorgebbarer Filterordnung und von einstellbarer Grenzfrequenz zugeführt. Das Tiefpaßfilter 31 dient dazu, das Zwischenfrequenzsignal ZF zur Vermeidung von Aliasing-Fehler bandzubegrenzen und somit für eine Digitalisierung entsprechend vorzuverarbeiten. Die Grenzfrequenz ist gemäß dem bekannten Nyquist-Abtasttheorem dazu auf weniger als das 0,5-fache, insb. aber auf höchstens das 0,2-fache, einer Abtastfrequenz eingestellt, mit der der passierengelassene Anteil des Zwischenfrequenzsignals ZF abgetastet wird. Für den Fall, daß das Zwischenfrequenzsignal ZF bereits in der beschriebenen Weise bandbegrenzt ist, kann ggf. auch auf das Tiefpaßfilter 31 verzichtet werden.

Ausgangsseits ist das Tiefpaßfilter 31 mit einem Signaleingang eines A/D-Wandlers (Analog-zu-Digital-Wandler) 32 der Steuerungseinheit 3 verbunden, der dazu dient, das via Tiefpaßfilter 31 zugeführte Zwischenfrequenzsignal ZF in ein dieses repräsentierendes, digitales Zwischenfrequenzsignal ZF_{D} umzuwandeln. Als A/D-Wandler 32 können hierzu dem Fachmann bekannte, z.B. seriell- oder parallel-umsetzende, A/D-Wandler verwendet werden, die mit der oben erwähnten Abtastfrequenz getaktet werden können. Ein dafür geeigneter A/D-Wandlertyp ist z.B. der eines Sampling A/D Converters LTC 1415 von Linear Technilogy Corp. mit einer Auflösung von 12 Bit und einer zulässigen Abtastfrequenz von kleiner gleich 1,25 MHz.

Für den Fall, daß der verwendete A/D-Wandler 32, wie z.B. vorgenannter LTC 1415, zum Umformen von ausschließlich positiven Signalwerten vorgesehen ist, ist eine Referenzspannung des A/D-Wandlers 32, entsprechend so einzustellen, daß ein zu erwartender minimaler Signalwert eingangs des Wandlers wenigstens ein Bit, insb. das höchste signifikante Bit (MSB), des Zwischenfrequenzsignals ZF_{D} setzt. Anders gesagt, dem ausgangs des Tiefpaßfilters 31 anliegenden Signal ist ein Gleichanteil so aufzuaddieren, daß es auf den A/D-Wandler 32 praktisch als ein Gleichsignal wirkt.

Das ausgangsseits des A/D-Wandlers 32 anliegende digitale Zwischenfrequenzsignal ZF_{D} wird, z.B. via internen Datenbus, abschnittweisweise in einen flüchtigen Datenspeicher 33 der Steuerungseinheit 3 geladen und dort als eine das Zwischenfrequenzsignal ZF momentan repräsentierende endliche Abtastfolge AF inform eines Ensembles digital gespeicherten Datensätzen, insb. für einen digitalen Füllstandsrechner 34 der Steuerungseinheit 3, verfügbar gehalten. Als Datenspeicher 33 können hierbei z.B. statische und/oder dynamische Schreib-Lese-Speicher dienen.

Zum Erzeugen des Füllstandsmeßwerts X_{H} aus der Abtastfolge AF hat der Füllstandsrechner 34, z.B. via internen Datenbus, zumindest temporär einen, insb. Daten lesenden, Zugriff auf den Datenspeicher 33 und die darin abgelegten Datensätze. Der Füllstandsrechner 34 kann z.B., wie in Fig. 2 schematisch dargestellt, mittels eines Mikroprozessors 30 und in diesem ablaufender Rechenprogramme realisiert sein.

Nach einer bevorzugten Ausgestaltung der Erfindung umfaßt die Steuerungseinheit 3 ferner einen als separate Teilschaltung ausgeführten Speichermananger 35, der mit dem Mikroprozessor 30, z.B. via internen Datenbus, kommunizierend dazu dient, den Datenspeicher 33 zu verwalten, insb. das Sampling des digitales Zwischenfrequenzsignals ZF_{D} und das Erzeugen der Abtastfolge AF zu steuern, und somit den Mikroprozessor 30 zu entlasten. Der Speichermananger 35 ist bevorzugt in einen programmierbaren Funktionsspeicher, z.B. ein PAL (programmable array logic) oder ein FPGA (field programmable gate array), implementiert. Falls erforderlich, kann der Speichermananger 35 aber auch mittels des Mikroprozessors 30 und entsprechenden, darin ablaufenden Rechenprogrammen realisiert sein.

Mittels des Speichermanangers 35 kann z.B. auch eine für derartige Füllstandsmeßgeräte übliche Mittelwert- oder Medianbildung über mehrere Abtastfolgen realisiert werden. Um eine ausreichend hohe Rechengeschwindigkeit zu erreichen, ist der Speichermananger 35 bevorzugt um ein Vielfaches, insb. um ein 8-, 10- oder 12-faches, schneller getaktet als der A/D-Wandler 32.

Die Ermittlung des Füllstandsmeßwerts X_{H} nach dem Pulsradar-Verfahren basiert, wie bereits erwähnt, auf der Auswertung einer vom momentanen Füllstand abhängigen Laufzeit der Echowellen E₁, die mittels der Abtastfolge AF im Datenspeicher 33 verfügbar gehaltenen Amplituden- und Phaseninformation nunmehr hochgenau bestimmt werden kann.

Zur Gewinnung der Amplitudeninformation des Zwischenfrequenzsignals ZF kann z.B. eine im Füllstandsrechner 34 implementierte digitale Gleichrichtung der Abtastfolge AF, also eine einfache Betragsbildung aller Datentupel der Abtastfolge AF, mit einer anschließenden Maximumsdetektion dienen, bei der ausgewählte Datentupel lokaler Maxima zur Modellierung einer Einhüllenden des Zwischenfrequenzsignals ZF, der sogenannten Hüllkurve, verwendet werden. Auf eine solche digital erstellte Hüllkurve können die dem Fachmann zur Ermittlung der Laufzeit bekannten Auswerteverfahren ohne weiteres angewendet werden. Falls erforderlich, können aber auch andere dem Fachmann bekannten Verfahren zur digitalen Amplitudendemodulation verwendet werden.

Neben der Hüllkurve können aus der Abtastfolge AF ferner auch die beiden bereits erwähnten, den Realanteil bzw. den Imginäranteil des Zwischenfrequenzsignals ZF repräsentierenden Quadratursignale zur Gewinnung der Phaseninformation abgeleitet werden. Dazu wird die Abtastfolge AF zumindest abschnittsweise, insb. im Bereich eines zuvor digital detektierten Nutzechos, mittels des Füllstandsrechners 34 zum einen mit einer digitalen Sinusfolge und zum anderen mit einer digitalen Cosinusfolge multipliziert. Die so generierten, digitalen Quadratursignale können anschließend ohne weiteres entsprechend dividiert und numerisch in ein entsprechendes Winkelmaß umgewandelt werden, vgl. hierzu auch die DE-A 44 07 369. Falls erforderlich, können aber auch andere Verfahren zur digitalen Gewinnung einer Phaseninformation aus der Abtastfolge AF angewendet werden.

Die zur Bestimmung des Füllstandsmeßwerts X_{H} aus den mittels Hüllkurve und mittels Quadratursignale gewonnenen Laufzeiten erforderlichen Auswerteverfahren können in der dem Fachmann bekannten Weise z.B. als im Mikroprozessor 30 ablaufendes Rechenprogramm realisiert sein. Die dazu jeweils erforderlichen Programmcodes können ohne weiters in einem, insb. permanent, beschreibbaren Speicher 36 der Auswertstufe 3, z.B. einem EPROM, einem Flash-EEPROM oder EEPROM, implementiert werden, auf den der Mikroprozessor 30 im Betrieb Daten lesend zugreift.

Das Füllstandsmeßgerät kann z.B. an einen, nichtdargestellten, Feldbus angeschlossen und so mit einer entfernten Meßwarte und mit einer externen Energieversorgung verbunden sein, die eine das Füllstandsmeßgerät, über eine interne Versorgungseinheit 4 eingestellt, speist. Zum Senden von Meßgerätedaten, insb. auch des Füllstandsmeßwerts X_{H}, an den den Feldbus umfaßt das Füllstandsmeßgerät des weiteren eine Kommunikationseinheit 5 mit entsprechenden Datenschnittstellen 51. Ferner kann die Kommunikationseinheit 5 auch, insb. zum Visualisieren von Meßgerätedaten und/oder um ein Einstellen des Füllstandsmeßgeräts vor Ort zu ermöglichen, eine entsprechende Anzeige- und Bedieneinheit 52 aufweisen.

## Patentansprüche

1. Mit Mikrowellen arbeitendes Füllstandsmeßgerät zum Erzeugen eines Füllstandsmeßwerts (X_{H}), der einen Füllstand in einem Behälter (200) repräsentiert, welches Füllstandsmeßgerät umfaßt:
- eine Sende/Empfangseinheit (2) zum Erzeugen eines vom Füllstand beeinflußten Zwischenfrequenzsignals (ZF) mittels eines Sendesignals (S₂) und eines Empfangssignals (E₂),
- ein Wandlerelement (1),
-- das im Betrieb vom Sendesignal (S₂) angesteuert Sendewellen (S₁) in den Behälter (200) einkoppelt und
-- das von einem Füllgut (201) reflektierte Echowellen (E₁) in das Empfangssignal (E₂) wandelt, sowie
- eine Steuerungseinheit (3) mit einem flüchtigen Datenspeicher (33) in dem im Betrieb zumindest temporär eine das Zwischenfrequenzsignal (ZF) momentan repräsentierende endliche Abtastfolge (AF) gespeichert ist.

2. Füllstandsmeßgerät nach Anspruch 1, das den Füllstandsmeßwert (X_{H}) mittels einer aus der Abtastfolge (AF) gewonnenen Amplitudeninformation bestimmt.

3. Füllstandsmeßgerät nach Anspruch 2, das den Füllstandsmeßwert (X_{H}) mittels einer aus der Abtastfolge (AF) gewonnenen Phaseninformation bestimmt.
